# EUROPEAN PATENT APPLICATION

(11) **EP 2 775 414 A1**
(43) Date of publication of application: **10.09.2014**
(21) Application number: 13772833.3
(22) Date of filing: 12.03.2013
(51) Int. Cl.: G06F 19/00

(54) **ROLE CLEARING METHOD, DEVICE AND SYSTEM FOR EMULATOR GAME**

(30) Priority: 05.04.2012 CN 201210097117
(71) Applicant: Tencent Technology Shenzhen Company Limited, Shenzhen, Guangdong 518044 (CN)
(72) Inventor: WANG, Xuxin, Shenzhen Guangdong 518044 (CN); YAO, Jianhui, Shenzhen Guangdong 518044 (CN); YANG, Weichao, Shenzhen Guangdong 518044 (CN); TANG, Wen, Shenzhen Guangdong 518044 (CN)
(74) Representative: Robinson, Nigel Alexander Julian
(86) International application number: PCT/CN2013/072455
(87) International publication number: WO 2013/149537

(57) **Abstract**

A role removal method, apparatus and system for an emulator game are provided. The method includes: when it is determined that there is a role to be removed from the emulator game, saving current game running information; calling a role removal function to remove the role to be removed; and loading the saved current game running information, so as to continue running the emulator game. The embodiment of the disclosure can modify stack data, a program pointer and the like of a game program by saving the current game running information and calling the role removal function, so as to achieve the purpose of controlling the game execution procedure. In particular, it can be guaranteed that a game player can exit the game at any time, and meanwhile the remaining game players can continue their games without being influenced.

## Description

### FIELD OF THE INVENTION

Embodiments of the disclosure relate to the technical field of electronic games, and more specifically to a role removal method, apparatus and system for an emulator game.

### BACKGROUND

An electronic game, also known as a video game, is an entertainment for people to play games on electronic devices such as computers, game consoles, etc.

As the rapid development of computer technology and network technology, Internet is playing an increasingly important role in people's daily lives, study and work. A gaming platform provides multiplayer computer online game service for internet users. It allows game players on the internet to easily connect to the internet to play games, as if they are in the same local area network. The gaming platform connects players that are thousands of miles away from each other through network protocol transforming techniques, and also provides real time interaction and communication among users. Any games that can be connected through a local area network can be played on the gaming platform in the same way as using the local area network, without the need of dedicated severs and storing complex IP addresses. Game players can play with others conveniently. All the players in each room on the gaming platform are just like staying in the same network area. Everyone interacts with each other, plays with other players, learns from others, and enjoys the fun of online gaming.

An emulator (EMU) is a program, and its original meaning is "Simulator". It enables computers or other multimedia platforms (personal digital assistants, cell phones) to be able to run programs of other platforms. The programs are mostly TV games and arcade game emulators. An emulator is a software product which runs programs by converting program instructions of other platforms to instructions that can be identified by the local machine. An emulator game is a game program which is on a non-local gaming platform and runs in the emulator. For example, on the current Arclive gaming platform, a plurality of players can play a game simultaneously by connecting to the internet, and if a player's role dies in the process of the game, the player can exit the game and other players can continue playing the game.

However, in the prior art, if multiple players are playing an emulator game and a certain player chooses to exit the game when the player's role is not dead yet, the whole game would be terminated and other players cannot continue playing the game either. The primary reason that causes such a case is that, in the prior art, a gaming platform is not able to remove the player's role after the player exits the game, and the player's role remaining in the game may cause negative affects to other players. As a result, a gaming platform in the prior art has to directly terminate the game, but this makes other players not able to continue playing the game.

### SUMMARY OF THE INVENTION

An embodiment of the disclosure provides a role removal method for an emulator game, so that in case a game player exits the game, the remaining players can continue their games without being influenced.

An embodiment of the disclosure also provides a role removal apparatus for an emulator game, so that in case a game player exits the game, the remaining players can continue their games without being influenced.

An embodiment of the disclosure also provides a role removal system for an emulator game, so that in case a game player exits the game, the remaining players can continue their games without being influenced.

The specific implementation of an embodiment of the disclosure is set forth below:
A role removal method for an emulator game, including:
   saving current game running information when it is determined that there is a role to be removed from the emulator game;
   calling a role removal function to remove the role to be removed; and
   loading the saved current game running information, so as to continue running the emulator game.

A role removal apparatus for an emulator game, including a current game running information saving unit, a role removal unit and a game information loading unit, wherein:
the current game running information saving unit is configured to save current game running information when it is determined that there is a role to be removed from the emulator game;
the role removal unit is configured to call a role removal function to remove the role to be removed; and
the game information loading unit is configured to load the saved current game running information, so as to continue running the emulator game.

A role removal system for an emulator game, including an emulator and an emulator game storage unit, wherein:
the emulator game storage unit is configured to save program instructions of the emulator game;
the emulator is configured to transform the program instructions of the emulator game stored by the emulator game storage unit into identifiable instructions, and execute the identifiable instructions so as to run the emulator game;
the emulator further includes a current game running information saving unit, a role removal unit and a game information loading unit, wherein: the current game running information saving unit is configured to save current game running information when it is determined that there is a role to be removed from the emulator game; the role removal unit is configured to call a role removal function to remove the role to be removed; and the game information loading unit is configured to load the saved current game running information, so as to continue running the emulator game.

An embodiment of the disclosure further provides a machine readable medium on which an instruction set is stored, wherein the machine is enabled to implement the above method when the instruction set is executed.

As observed from the above technical solutions, in an embodiment of the disclosure, current game running information is saved when it is determined that there is a role to be removed from the emulator game, and a role removal function is called to remove the role to be removed; and then the saved current game running information is loaded, so as to continue running the emulator game. As such, by applying the embodiments of the disclosure, the emulator can modify stack data, a program pointer and the like of the game program by saving the current game running information and calling the role removal function, so as to achieve the purpose of controlling the game execution procedure. In particular, it can be guaranteed that any game players can exit the game at any time, and the remaining game players can continue their games without being influenced.

### DESCRIPTION OF THE DRAWINGS

Fig. 1 is a flow diagram of a role removal method for an emulator game in accordance with an embodiment of the disclosure;
Fig. 2 is a flow diagram of an exemplary role removal method for an emulator game in accordance with an embodiment of the disclosure;
Fig. 3 is a structural diagram of a role removal apparatus for an emulator game in accordance with an embodiment of the disclosure;
Fig. 4 is a structural diagram of a role removal system for an emulator game in accordance with an embodiment of the disclosure.

### DETAILED DESCRIPTION

The present disclosure will be further described in details hereinafter with reference to accompanying figures, in order to make the technical solution and advantages of the disclosure more apparent.

In an embodiment of the disclosure, an emulator game is running in an emulator. The emulator can control the execution procedure of the program of the emulator game, and therefore the control of role removal can be realized based on the operations of the emulator.

The emulator can acquire information associated with role removal (such as the addresses and parameter formats of functions associated with role health points deduction, role life points deduction, killing of the role, and the addresses of data identifying game status and role status) in a normal game procedure from the game program developer, and then perform role removal operations based on such information.

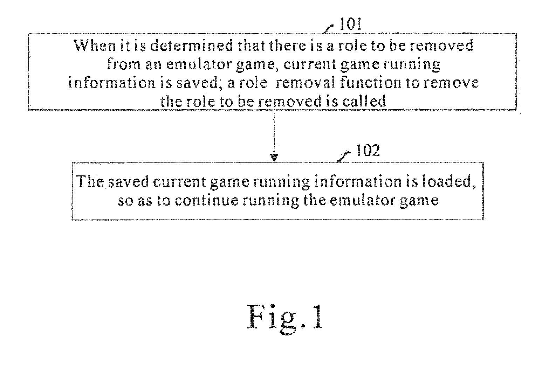

Fig. 1 is a flow diagram of a role removal method for an emulator game in accordance with an embodiment of the disclosure.

As illustrated in Fig. 1, the method includes:
Step 101: current game running information is saved when it is determined that there is a role to be removed from the emulator game.

Here, the emulator needs to determine whether there is currently a role to be removed when cyclically executing program instructions of the game. When it is determined that there is currently a role to be removed, the emulator usually accesses the game data area and examines whether values of related addresses meet requirements, based on game information provided by a game program developer. For example, the emulator may access a game server, and determine whether there is currently a role to be removed by determining whether there is role status data indicating an inactive role in the game server. When the emulator determines that there is role status data indicating an inactive role in the game server, it is determined that the emulator game has a role to be removed.

Step 102: A role removal function to remove the role to be removed is called.

In an embodiment, the step of calling a role removal function to remove a role to be removed may include: firstly saving the identity of the role to be removed in stack data of the emulator game; and then modifying a program pointer of the emulator game to run the role removal function. The role removal function calls the identity of the role to be removed which is saved in the stack data as the parameter, so as to eliminate a role corresponding to the identity of the role to be removed.

The stack data of the game refers to a variant storage area that can be automatically allocated and released by a compiler when needed and automatically cleared by the compiler when not needed. The stack data of the game is mainly used to store temporary variants, parameter passing and function return addresses. The program pointer of the game indicates the address of the next instruction to be executed.

If the identity of the role to be removed is provided to the related role removal function by passing a parameter, the parameter can be stored by means of stack data or registers, and then transferred to the related function.

If it is not provided to the related role removal function by passing a parameter, the related role removal function may firstly acquire the specific storage address of the identity of the role to be removed, and then apply the storage value corresponding to the address as the identity of the role to be removed. In particular, the identity of the role to be removed is firstly stored at a predetermined storage address; and then the program pointer of the emulator game is modified to run the role removal function, wherein the role removal function accesses the predetermined storage address to acquire the identity of the role to be removed, and removes the role corresponding to the identity of the role to be removed.

Preferably, there may be several roles of players to be removed. In this case, there may be a plurality of identities of the roles to be removed. Furthermore, it may be required to call functions in several game programs in order to achieve the aim of role removal, and thus the step of role removal may be repeated several times.

Depending on a specific game program and its application environment, the role removal function may include at least one of the following functions: role health points deduction function, role life points deduction function, killing of the role function, and the like.

Step 103: the saved current game running information is loaded, so as to continue running the emulator game.

Here, when the role removal function is executed and returned, generally, all the roles are removed. At this time, the emulator game may keep running by loading the saved current game running information. In particular, the previous data of the game program, such as the stack data and the program pointer, can be restored, so that the game program can keep running normally.

In certain game situations, it is not appropriate to immediately perform the role removal operation when it is determined that there is a role to be removed. For example, when a game mission is completed and a mission completion animation is being played, or when the role removal function cannot be immediately executed, the role removal operation should not be immediately performed. The corresponding role removal operation should not be performed until the playing of the mission completion animation is finished or the role removal function can be executed.

Preferably, after it is determined that there is a role to be removed from the emulator game, it is further determined whether to immediately perform the role removal depending on the running status of the game. If the result of the determination is YES, step 101 and the subsequent step 102, 103 are performed. Otherwise, exit the procedure.

In the embodiment, the related game data area can be accessed and the values of related addresses can be viewed, based on the information provided by the game program developer, so as to determine whether it is appropriate to perform the role removal under the current game status. If the game status meets the requirements for role removal, based on the information provided by the game program developer, the current stack data and the program pointer are backed up, the current stack data of the game is modified (usually a role related function would be called to input a reasonable parameter. As an example, the identity of the role to be removed can be used as the parameter.), and then the current program pointer is modified, so as to call a function associated with role removal in the game program to eliminate a role corresponding to the identity of the role to be removed. After all of the roles to be removed are removed, the previous data of the game program, such as the stack data, the program pointer and the like, are restored to make the game program keep running normally.

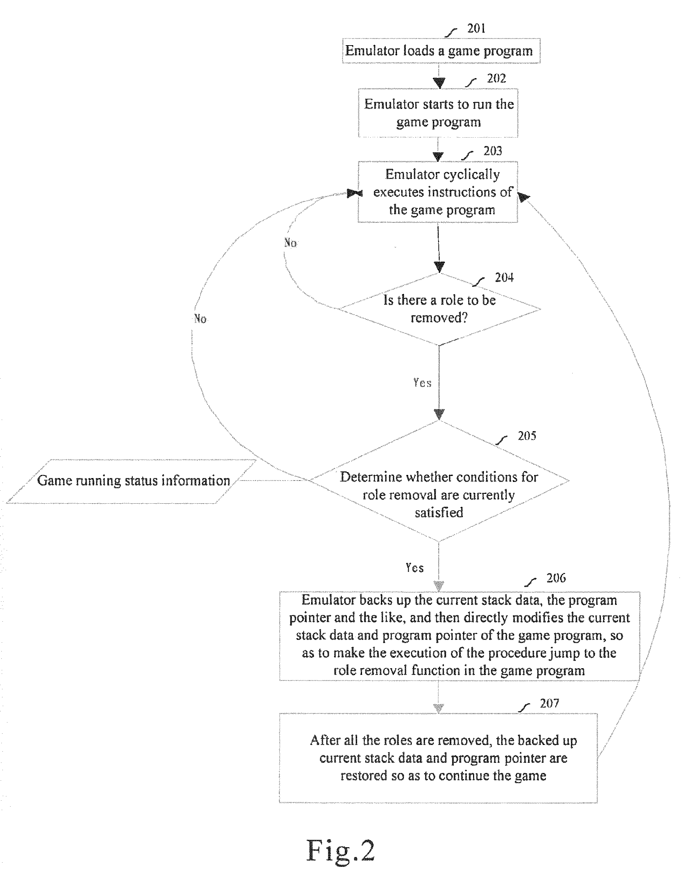

On basis of the above analysis, Fig. 2 is a flow diagram of an exemplary role removal method for an emulator game in accordance with an embodiment of the disclosure.

As shown in Fig. 2, the method includes:
Step 201: the emulator loads the game program.
Step 202: the emulator begins to run the game program.
Step 203: the emulator cyclically executes instructions of the game program.
Step 204: the emulator determines whether there is a role to be removed from the game. If the result is YES, step 205 and its subsequent steps will be performed. Otherwise, the procedure will go back to step 203, step 203 and its subsequent steps will be performed. Here, when a player chooses to exit the game, the role status data of the role is inactive. It can be determined whether there is a role to be removed by determining the role status data of each player's role.
Step 205: It is determined whether the conditions for role removal are satisfied based on information of game running status. If the conditions are satisfied, step 206 and its subsequent steps will be performed. Otherwise, the procedure returns to step 203.

Here, in certain game situations, it is not appropriate to immediately perform the role removal operation when it is determined that there is a role to be removed. Instead, it is determined whether the conditions for the role removal are currently satisfied, based on the information of game running status.

For example, when a game mission is completed and a mission completion animation is being played, or when the role removal function cannot be immediately executed, the role removal operation should not be immediately performed. The corresponding role removal operation should not be performed until the playing of the mission completion animation is finished or the role removal function can be executed.

Step 206: the emulator backs up the current stack data, the program pointer and the like, and then directly modifies the current stack data and program pointer of the game program, so as to make the execution of the procedure jump to the role removal function in the game program.

Here, the game program usually has a role removal function saved therein. The emulator may perform the role removal by calling the role removal function after backing up the data such as the current stack data, the program pointer and the like.

Step 207: after all the roles have been removed, the current stack data and the program pointer backed up in step 206 are restored so as to continue running the game.

When applying the above procedure, in the emulator game, the emulator can modify data of the game program such as the stack data, the program pointer, and the like according to specific circumstances, and initiatively call functions in the game program (or initiatively modify data in the game program), so as to achieve the purpose of controlling the game execution procedure. Moreover, a game player can exit the game at any time, and other players can continue playing the game without being influenced.

In the disclosure, an emulator game can be operated on currently popular online arcade gaming platforms such as an Arclive platform, a SupARC platform, and an ARC platform, etc.

It can be appreciated by those skilled in the art that although some specific instances of online arcade gaming platforms are listed in details hereinabove, the embodiments of the disclosure are not limited to those specific instances.

On basis of the above analysis, an embodiment of the disclosure also provides a role removal apparatus for an emulator game.

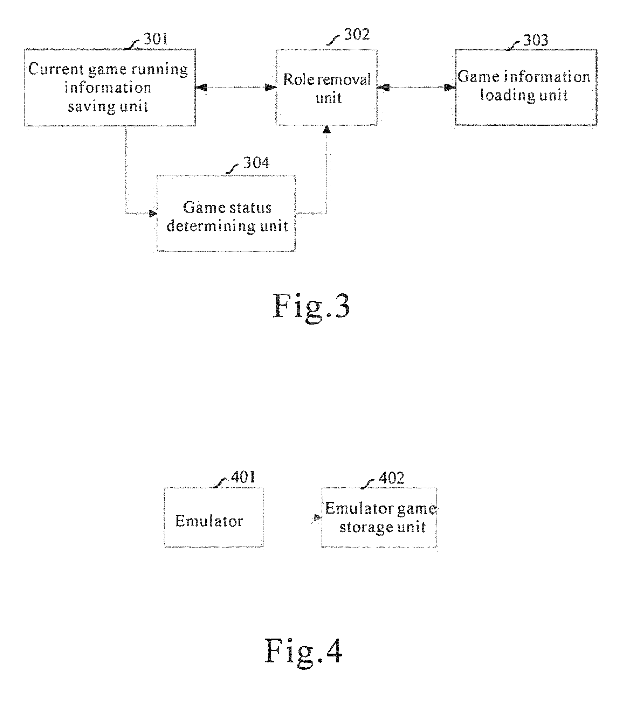

Fig. 3 is a structural diagram of a role removal apparatus for an emulator game in accordance with an embodiment of the disclosure. As shown in Fig. 3, the apparatus includes a current game running information saving unit 301, a role removal unit 302 and a game information loading unit 303, wherein:
the current game running information saving unit 301 is configured to save the current game running information when it is determined that there is a role to be removed from the emulator game;
the role removal unit 302 is configured to call a role removal function to remove the role to be removed; and
the game information loading unit 303 is configured to load the saved current game running information, so as to continue running the emulator game.

In an embodiment, the current game running information saving unit 301 is configured to determine that there is a role to be removed from the game when determining that there is role status data indicating an inactive role.

In an embodiment, the role removal unit 302 is configured to save an identity of the role to be removed in the stack data of the emulator game; and then modify a program pointer of the emulator game to run the role removal function, wherein the role removal function calls the identity of the role to be removed which is saved in the stack data as the parameter, so as to eliminate a role corresponding to the identity of the role to be removed.

In an embodiment, the apparatus further includes a game status determining unit 304.

The game status determining unit 304 is configured to determine whether to immediately conduct role removal based on the game running status when it is determined that there is a role to be removed from the emulator game by the current game running information saving unit 301. If the result of determination is YES, the current game running information saving unit saves the current game running information; otherwise, the current game running information saving unit keeps waiting until to be triggered the next time.

Preferably, the game status determining unit 304 is configured to determine whether to immediately conduct the role removal depending on whether a role removal function can be immediately operated and/or a mission completion animation is being displayed.

Furthermore, the role removal function specifically includes at least one of the following functions: role health points deduction function, role life points deduction function, killing of the role function, and the like.

In the embodiment of the disclosure, the current game running information saving unit 301 saves the current game running information and determines whether there is a role to be removed from the emulator game. But the functions of saving the current game running information and determining whether there is a role to be removed from the emulator game may also be realized by different functional modules.

An embodiment of the disclosure also provides a role removal system for an emulator game.

Fig. 4 is a structural diagram of a role removal system for an emulator game in accordance with an embodiment of the disclosure.

As shown in Fig. 4, the system includes an emulator 401 and an emulator game storage unit 402.

The emulator game storage unit 402 is configured to save program instructions of the emulator game. Particularly, the program instructions may include a program pointer and a stack pointer.

The emulator 401 is configured to transform the program instructions of the emulator game stored by the emulator game storage unit 402 into identifiable instructions, and execute the identifiable instructions so as to run the emulator game.

The emulator 401 may have the same structure as the role removal apparatus for the emulator game as illustrated in Fig. 3.

In particular, the emulator 401 further includes a current game running information saving unit, a role removal unit and a game information loading unit, wherein: the current game running information saving unit is configured to save the current game running information when it is determined that there is a role to be removed from the emulator game; the role removal unit is configured to call a role removal function to remove the role to be removed; and the game information loading unit is configured to load the saved current game running information, so as to continue running the emulator game.

In particular, the role removal unit in the emulator 401 is configured to save an identity of the role to be removed in the stack data of the emulator game; and modify the program pointer of the emulator game to run a role removal function, wherein the role removal function calls the identity of the role to be removed which is saved in the stack data as the parameter, so as to eliminate a role corresponding to the identity of the role to be removed.

Preferably, the emulator 401 further includes a game status determining unit. The game status determining unit is configured to determine whether to immediately conduct role removal in accordance with the game running status when it is determined that there is a role to be removed from the game by the current game running information saving unit. If the result of determination is YES, the current game running information saving unit saves the current game running information; otherwise, the current game running information saving unit keeps waiting until to be triggered the next time.

In summary, in an embodiment of the disclosure, when it is determined that there is a role to be removed from the emulator game, current game running information is saved, and a role removal function is called to remove the role to be removed; and then the saved current game running information is loaded, so as to continue running the emulator game. As such, by applying the embodiments of the disclosure, the emulator can modify the stack data, a program pointer and the like of a game program by saving the current game running information and calling the role removal function, so as to achieve the purpose of controlling the game execution procedure. In particular, it can be guaranteed that a game player can exit the game at any time, and the remaining game players can continue their games without being influenced.

From the above description of various embodiments, it can be understood by those skilled in the art that the disclosure can be implemented with the help of a platform using both software and hardware. Of course, the disclosure can also be implemented by hardware, but in most cases, the implementation using both software and hardware is a preferred implementation.

Parts of the technical solution of the disclosure that are essential or make contributions to the prior art may be embodied in the form of a computer software product. The instruction set of the computer software product may be stored in a machine readable medium, such as a floppy disk, a hard disk or an optical disk of the computer. A plurality of instructions involving the above described method can be read and executed by the machine, which may be for example a terminal device (a cell phone, a personal computer, a server or a network device, etc). When the instruction set is executed, the machine is enabled to implement the methods as set forth in the above various embodiments of the disclosure to realize similar functions and technical effects, it will not be repeated herein.

The description herein only provides preferable embodiments of the disclosure, and should not be used to limit the protection scope of the disclosure. Any modifications, equivalent alternations, improvements, and the like that are made within the spirit and principle of the disclosure should be included in the protection scope of the disclosure.

## Claims

1. A role removal method for an emulator game, wherein the method comprising:
saving current game running information when it is determined that there is a role to be removed from the emulator game;
calling a role removal function to remove the role to be removed; and
loading the saved current game running information, so as to continue running the emulator game.

2. The role removal method for an emulator game according to claim 1, wherein calling a role removal function to remove the role to be removed comprising:
saving an identity of the role to be removed in stack data of the emulator game;
modifying a program pointer of the emulator game to run the role removal function, wherein the role removal function calls the identity of the role to be removed which is saved in the stack data as the parameter, so as to eliminate a role corresponding to the identity of the role to be removed.

3. The role removal method for an emulator game according to claim 1, wherein calling a role removal function to remove the role to be removed comprising:
storing the identity of the role to be removed in a predetermined storage address;
modifying a program pointer of the emulator game to run the role removal function, wherein the role removal function accesses the predetermined storage address to acquire the identity of the role to be removed, and removes the role corresponding to the identity of the role to be removed.

4. The role removal method for an emulator game according to claim 1, wherein after determining that there is a role to be removed, the method further comprising:
determining whether to immediately conduct the role removal based on game running status; and
continuing the procedure of the role removal method if the result of the determination is YES, and otherwise exiting the procedure of the role removal method.

5. The role removal method for an emulator game according to claim 4, wherein determining whether to immediately conduct the role removal based on game running status comprising: determining whether the role removal function can be immediately operated, and/or determining whether an animation is being displayed.

6. The role removal method for an emulator game according to any one of claims 1-5, wherein the role removal function comprises at least one of the following functions: role health points deduction function, role life points deduction function, and killing of the role function.

7. The role removal method for an emulator game according to any one of claims 1-5, wherein determining whether there is a role to be removed from the emulator game specifically comprising:
determining the emulator game has a role to be removed, when it is determined that there is role status data indicating an inactive role.

8. The role removal method for an emulator game according to any one of claims 1-5, wherein the platform on which the emulator game is operated comprising: an Arclive platform, a SupARC platform, an ARC platform for arcade gaming.

9. A role removal apparatus for an emulator game, wherein the apparatus comprises a current game running information saving unit, a role removal unit and a game information loading unit, wherein:
the current game running information saving unit is configured to save current game running information when it is determined that there is a role to be removed from the emulator game;
the role removal unit is configured to call a role removal function to remove the role to be removed; and
the game information loading unit is configured to load the saved current game running information, so as to continue running the emulator game.

10. The role removal apparatus for an emulator game according to claim 9, wherein,
the role removal unit is configured to save an identity of the role to be removed in stack data of the emulator game; and modify a program pointer of the emulator game to run the role removal function, so as to eliminate a role corresponding to the identity of the role to be removed, wherein the role removal function calls the identity of the role to be removed which is saved in the stack data as the parameter.

11. The role removal apparatus for an emulator game according to claim 9, wherein, the apparatus further comprising a game status determining unit,
the game status determining unit is configured to determine whether to immediately conduct the role removal based on game running status; if the result of the determination is YES, the current game running information saving unit saves the current game running information, and otherwise, the current game running information saving unit keeps waiting until to be triggered the next time.

12. The role removal apparatus for an emulator game according to claim 11, wherein,
the game status determining unit is configured to determine whether to immediately conduct the role removal by: determining whether the role removal function can be immediately operated and/or determining whether an animation is being displayed.

13. The role removal apparatus for an emulator game according to any one of claims 9-12, wherein the role removal function comprises at least one of the following functions: role health points deduction function, role life points deduction function, and killing of the role function.

14. The role removal apparatus for an emulator game according to any one of claims 9-12, wherein,
the current game running information saving unit is configured to determine the emulator game has a role to be removed when it is determined that there is role status data indicating an inactive role.

15. A role removal system for an emulator game, wherein the system comprises an emulator and an emulator game storage unit, wherein:
the emulator game storage unit is configured to save program instructions of the emulator game;
the emulator is configured to transform the program instructions of the emulator game stored by the emulator game storage unit into identifiable instructions, and execute the identifiable instructions so as to run the emulator game;
the emulator further comprises a current game running information saving unit, a role removal unit and a game information loading unit, wherein: the current game running information saving unit is configured to save current game running information when it is determined that there is a role to be removed from the emulator game; the role removal unit is configured to call a role removal function to remove the role to be removed; and the game information loading unit is configured to load the saved current game running information, so as to continue running the emulator game.

16. The role removal system for an emulator game according to claim 15, wherein,
the role removal unit is configured to save an identity of the role to be removed in stack data of the emulator game; and modify a program pointer of the emulator game to run the role removal function, wherein the role removal function calls the identity of the role to be removed which is saved in the stack data as the parameter, so as to eliminate a role corresponding to the identity of the role to be removed.

17. The role removal system for an emulator game according to claim 15, wherein, the emulator further comprises a game status determining unit;
the game status determining unit is configured to determine whether to immediately conduct the role removal based on game running status, if the result of determination is YES, the current game running information saving unit saves the current game running information, and otherwise, the current game running information saving unit keeps waiting until to be triggered the next time.

18. A machine readable medium on which a set of instructions is stored, the set of instructions, when executed, causes the machine to implement the method according to any one of claims 1-8.
